# EUROPEAN PATENT APPLICATION

(11) **EP 1 251 063 A2**
(43) Date of publication of application: **23.10.2002**
(21) Application number: 02008372.1
(22) Date of filing: 12.04.2002
(51) Int. Cl.: B62D 27/02, B62D 25/02, B62D 25/10

(54) **A method of assembling a motor-vehicle bodywork element such as a door, a hatch, or a bonnet**

(30) Priority: 18.04.2001 IT TO20010377
(71) Applicant: COMAU S.p.A., 10095 Grugliasco (Torino) (IT)
(72) Inventor: Molina, Giuseppe, 10029 Villastellone (Torino) (IT); Bigando, Mauro, 10136 Torino (IT)
(74) Representative: Fioravanti, Corrado

(57) **Abstract**

In order to assemble a motor-vehicle bodywork element such as a door, a hatch or a bonnet, the peripheral margins (3a-3d) of an outer metal covering panel (1) are juxtaposed against the peripheral margins (4a-4d) of an inner metal framework panel (2), after which the peripheral margins (3a-3d, 4a-4d) of the two panels (1, 2) are joined together by laser welding (A).

## Description

The present invention relates to a method of assembling a movable motor-vehicle bodywork element such as a door, a rear hatch, a bonnet, etc., constituted by an outer metal covering panel and by a inner metal framework panel which are joined together firmly along their peripheral margins. The invention is also applicable to the assembly of a few fixed motor-vehicle bodywork elements such as, for example, the outer rear wheel arches which are joined to the side panel.

Throughout the description and in the appended claims, terms and expressions such as "inner, outer, front, rear, upper, lower " etc., should be understood as relating to the condition of mounting on the motor vehicle.

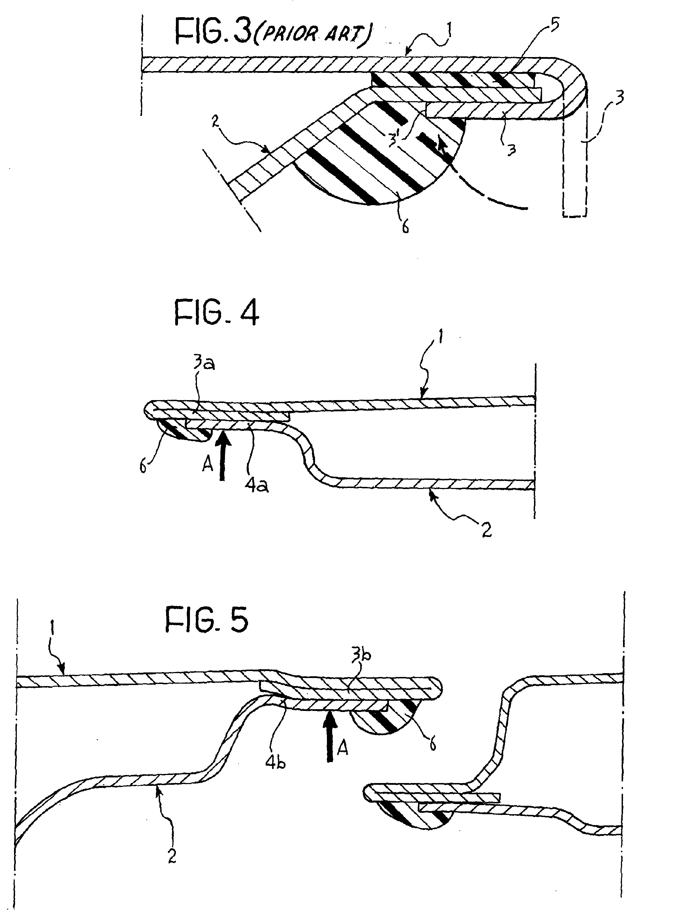

For a better understanding of the prior art and of the problems inherent therein, a conventional assembly solution will be described first of all, with reference to Figure 3 of the appended drawings.

Conventionally, a seaming process with the application of adhesive is used to produce a metal door formed by the assembly of an outer metal covering panel or skin 1 and an inner metal framework panel 2. A peripheral edge 3 of the outer covering panel 1 is bent around the peripheral edge of the inner panel 2 and a peripheral strip of structural adhesive 5 is interposed between them. A bead of sealing material 6 is applied along the inner face of the door to cover the end 3' of the bent edge 3. The adhesive 5 performs the dual function of:
- preventing infiltration of water and hence the formation of rust (sealing function), and
- preventing detachment of the two panels (structural function).

An object of the present invention is to propose a alternative to the above-mentioned conventional assembly method of seaming with the application of adhesive which involves high costs relating to the seaming tools and environmental and health problems caused by the structural adhesive which is well-known to be noxious and polluting.

Another object of the invention is to improve the structural stiffness of the assembled unit composed of the two, inner and outer panels.

Further objects of the invention are to limit the play and tolerances in the assembled product, to reduce the overall weight of the assembled product and the total amount of material used for the construction of the panels and, finally, to permit improved pressing of the inner framework panel.

These and other objects and advantages which will be understood better from the following description are achieved, according to the invention, by a method as defined in the appended claims.

A preferred and non-limiting embodiment of an assembly method according to the invention will now be described; reference is made to the appended drawings in which:
Figures 1 and 2 are perspective views of an outer covering panel and an inner framework panel which are to be assembled to form a movable motor-vehicle bodywork element, in this example, a front door,
Figure 3 is a schematic view showing, in section and on an enlarged scale, the edges of a door assembled by a conventional method of seaming and application of adhesive,
Figure 4 is a view showing, in horizontal section and on an enlarged scale, the assembled unit formed by the joining of the edges of the panels shown separately in Figures 1 and 2 in the region indicated by the lines IV-IV in Figures 1 and 2,
Figure 5 is a horizontal section view similar to Figure 4, taken on the lines V-V,
Figure 6 is a vertical section view similar to the sections of Figures 4 and 5, taken on the lines VI-VI of Figures 1 and 2,
Figure 7 is a vertical section view taken on the line VII-VII through a lower edge of the door shown in Figures 1 and 2, and
Figure 8 is a section through the edge of a wheel arch constituted by two panels assembled by means of a method according to the present invention.

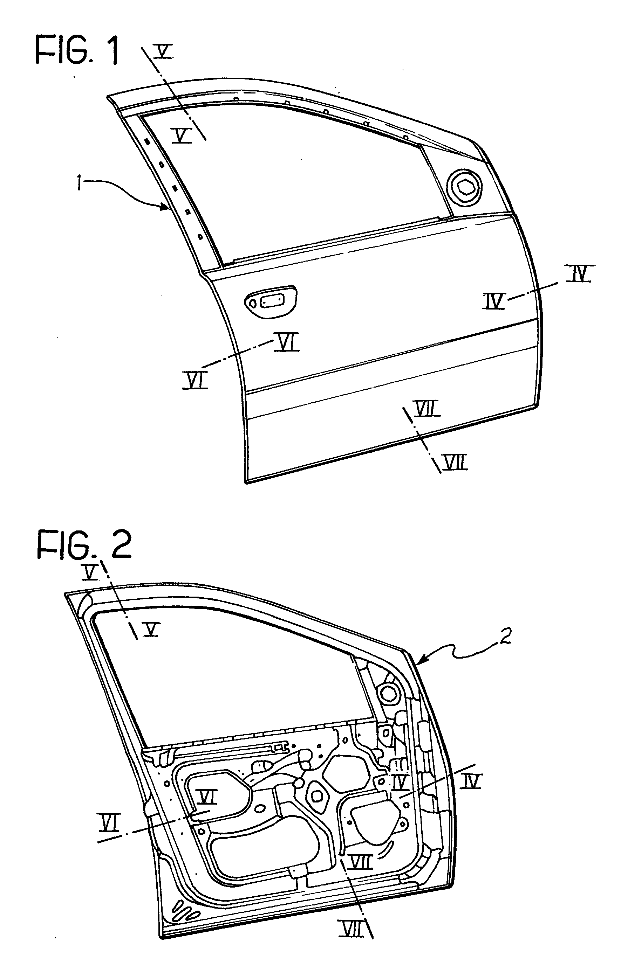

With reference now to Figures 1, 2 and 4, the front peripheral margin 3a of an outer metal covering panel 1 is bent through 180°; an inner metal framework panel 2 is placed against the outer panel 1 with the outer surface of the margin 4a of the inner panel bearing against the inner surface of the bent margin 3a of the covering panel.

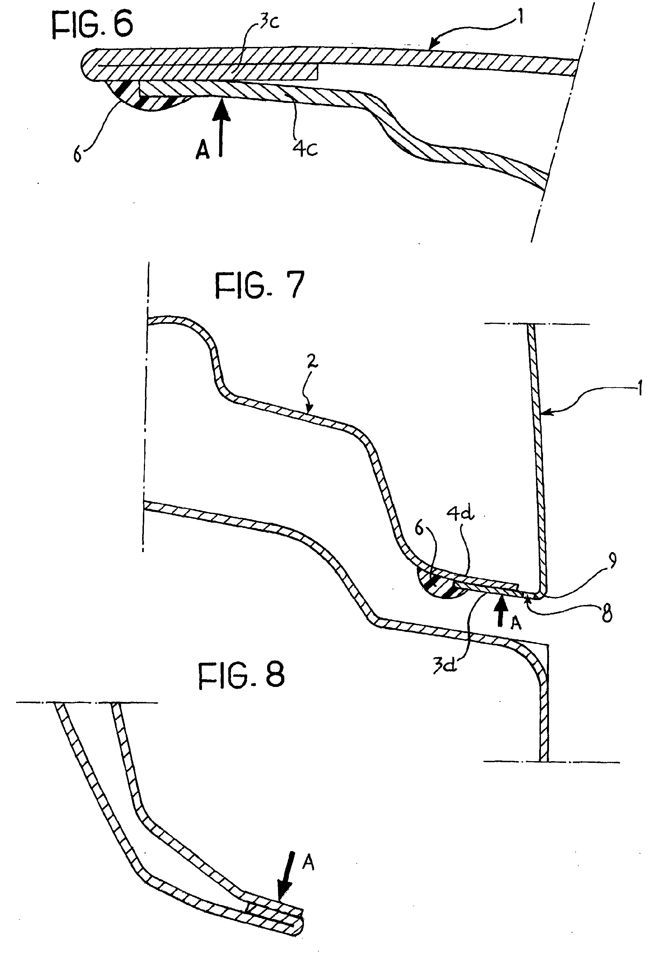

With reference to Figures 5 and 6, which show the rear margins 3b, 3c and the upper margins 4b, 4c of the outer and inner panels, respectively, the juxtaposition of these latter margins gives rise to a configuration similar to that shown in Figure 4; the outer surfaces of the margins 4b and 4c of the framework panel 2 bear against the inner surfaces of the bent margins 3b and 3c of the outer covering panel 1, respectively.

As shown in Figure 7, along the lower side of the door, the margin 3d of the outer covering panel 1 is not bent onto itself through 180° but is bent through a smaller angle and the lower or outer face of the margin 4d of the inner framework panel bears against the upper or inner face of the margin 3d. This configuration allows any water which has infiltrated between the panels 1 and 2 to flow out through one or more holes 8 located at the lowest points of the cavity defined by the panels 1 and 2; in this embodiment, holes 8 are shown distributed in the vicinity of and along the bend 9 in the covering panel 1.

The outer and inner panels are assembled by laser welding applied (in the direction of the arrows A in Figures 4-7) to the juxtaposed margins of the two panels, from the side of the margin surface which, in the mounted condition, will be arranged facing towards the interior of the motor vehicle or in any case towards regions that are not visible from outside the vehicle. Along the front, upper and rear peripheral portions of the door, the laser radiation thus falls on the margins 4a, 4b, 4c of the inner panel, more precisely, on their surfaces which face towards the interior of the vehicle (Figures 4 and 5) or downwards (Figure 6), welding the margins 3 and 4 together; along the lower peripheral portion of the door, on the other hand, the laser radiation falls on the margin 3d of the outer panel.

The power and intensity of the laser radiation will be regulated in known manner in dependence on the thickness of the metal sheets to be joined together. The welding operations will preferably be performed by automated apparatus of per se known type which is therefore not described herein.

It is pointed out that the invention may equally well be applied to the assembly of panels made of sheet steel or of other metals or alloys such as, for example, aluminium.

As will be clear to persons skilled in the art, the invention is not applicable purely to the assembly of movable motor-vehicle bodywork elements but may, for example, also be applied to the rear wheel arch region, as shown, for example, in Figure 8.

Figures 4-7 show an outer bead of sealant 6 which is applied upon completion of the welding, covering the sharp edges of the panels in order to protect the passengers.

As will be appreciated, the welding enables structural adhesive to be eliminated since the welding itself is a strong element which supports the loads. A robot, or a manual operation for the deposition of the structural adhesive, is thus eliminated and the use of noxious materials which are difficult to dispose of is also avoided. The laser-welded structure enables better performance to be achieved from the point of view of the structural stiffness of the assembly.

## Claims

1. A method of assembling an outer metal covering panel (1) and an inner metal framework panel (2) forming a motor-vehicle bodywork element such as a door, a hatch or a bonnet, the method comprising the step of:
(a) juxtaposing the peripheral margins (3a-3d) of an outer metal covering panel (1) against the peripheral margins (4a-4d) of an inner metal framework panel (2),
the method being **characterized in that** it comprises the step of:
(b) joining together the peripheral margins (3a-3d, 4a-4d) of the two panels (1, 2), by laser welding (A).

2. A method according to Claim 1, **characterized in that**, in step (b), the welding is performed by directing the laser radiation (A) against the surfaces of the margins (3a-3d, 4a-4d) which are to face towards the interior of the vehicle or towards regions that are not visible from outside the vehicle, in use.

3. A method according to Claim 1, **characterized in that** step
(a) is preceded by the steps of:
- bending, through an angle of between 0° and 180°, a peripheral margin (3d) of the outer covering panel (1) which is to occupy a lower position in the condition of mounting on the motor vehicle, and
- bending the remaining peripheral margins (3a, 3b, 3c) of the outer covering panel (1) through 180°.

4. A method according to Claim 3, **characterized in that** step
(b) comprises the steps of:
(b1) directing the laser radiation (A) against the lower bent margin (3d) of the outer covering panel (1), and
(b2) directing the laser radiation (A) against the peripheral margins (4a, 4b, 4c) of the inner framework panel (2) that are juxtaposed against the peripheral margins (3a, 3b, 3c) which are bent through 180° and belong to the outer panel (1).

5. A method according to Claim 3, **characterized in that** it further comprises the step of:
- providing at least one through-hole (8) in the vicinity of the bent peripheral margin (3d) which is to occupy a lower position in the condition of mounting on the motor vehicle.

6. A motor-vehicle bodywork element comprising an outer metal covering panel (1) assembled with an inner metal framework panel (2), **characterized in that** the two panels (1, 2) are joined together by means of a method according to any one of the preceding claims.
